# EUROPEAN PATENT APPLICATION

(11) **EP 2 551 676 A1**
(43) Date of publication of application: **30.01.2013**
(21) Application number: 12189543.7
(22) Date of filing: 27.03.2006
(51) Int. Cl.: G01N 35/00, B01F 13/08

(54) **An improved system and method for stirring suspended solids in liquid media**

(30) Priority: 28.03.2005 US 665692 P
(62) Divisional of application: 06739666.3
(71) Applicant: Becton, Dickinson and Company, Franklin Lakes, New Jersey 07417-1880 (US)
(72) Inventor: Foley, Timothy G., Jr., Forest Hill, MD Maryland 21050 (US); Beaty, Shawn P., Dallastown, PA Pennsylvania 17313 (US); Walters, Michael R., Baltimore, MD Maryland 21220 (US); Clark, Alexander W., Baltimore, MD Maryland 21218 (US); Livingston, Dwight, Fallston, MD Maryland 21047 (US); Lentz, David A., York, PA Pennsylvania 17402 (US); Bartkowiak, Miroslaw, New Freedom, PA Pennsylvania 17360 (US); Schwarz, Daniel, Timonium, MD Maryland 21093 (US); Hansen, Paul R., Hampstead, MD Maryland 21074 (US); Bachur, Nicholas R., Jr., Monkton, MD Maryland 21111 (US)
(74) Representative: von Kreisler Selting Werner

(57) **Abstract**

A system comprising one or more sample vessels is provided, the sample vessels comprising a liquid growth medium and a stirrer element, the stirrer element capable of being influenced by a magnetic force, and an incubation and measurement module comprising one or more openings for holding the one or more sample vessels. The incubation and measurement module further comprises at least two drive magnets associated with each of the sample vessels, and a magnet driver adapted to repeatedly move each of the at least two drive magnets toward and away from the surface of the associated sample vessel.

## Description

### REFERENCE TO PRIOR APPLICATIONS

This application claims priority to U.S. Provisional Patent Application Serial No. 60/665,692, filed March 28, 2005.

### BACKGROUND OF THE INVENTION

### Field of the Invention:

The invention relates to an improved system and method for stirring suspended solids in a liquid media.

### Description of the Related Art:

Many medical diagnoses require that a fluid sample, such as a blood sample, be taken from a patient, cultured in a growth medium, and then examined for the presence of a pathogen believed to be causing the patient's illness. The growth medium provides nutrients that allow the pathogen, such as bacteria, virus, mycobacteria, mammalian cells or the like, to multiply to a sufficient number so that their presence can be detected.

In some cases, the pathogen can multiply to a large enough number so that it can be detected visually. For example, a portion of the culture can be placed on a microscope slide, and visually examined to detect for the presence of a pathogen of interest.

Alternatively, the presence of a pathogen or other organism can be detected indirectly by detecting for the presence of byproducts given off by the microorganism during its growth. For example, certain microorganisms such as mammalian cells, insect cells, bacteria, viruses, mycobacteria and fungi consume oxygen during their growth and life cycle. As the number of microorganisms increases in the sample culture, they naturally consume more oxygen. Furthermore, these oxygen consuming organisms typically release carbon dioxide as a metabolic byproduct. Accordingly, as the number of organisms present increases, the volume of carbon dioxide that they collectively release likewise increases.

Alternatively, instead of measuring the presence of carbon dioxide to detect the presence of an oxygen consuming microorganism, it is possible to measure a depletion in the concentration of oxygen in the sample of interest. The presence of oxygen consuming organisms can also be detected by measuring a change in the pressure in a sealed sample vial containing the sample of interest. That is, as oxygen in a closed sample vial is depleted by oxygen consuming organisms, the pressure in the sealed sample vial will change. The pressure will further change in the sample vial as the organisms emit carbon dioxide. Therefore, the presence of such organisms can be detected by monitoring for changes in pressure in the closed sample vial.

Several methods exist for measuring the increase of carbon dioxide in a sample to determine whether organisms are present in the sample. For example, an instrument known as the Bactec^{®} 9050 manufactured by Becton Dickinson and Company detects changes in the color of an indicator to determine whether carbon dioxide is present in a sample. That is, each sample is collected in a respective sample vial containing an indicator medium having a chemical that reacts in the presence of carbon dioxide to change color. A light sensor then detects the color of the indicator medium in the sample vial when the sample vial is loaded into the instrument. If the sample contains an organism which emits carbon dioxide as a function of growth and/or metabolic activity, the reflected or fluorescent intensity of the indicator medium will change in response to the presence of carbon dioxide. The light sensor will therefore detect this change in intensity, and the instrument will thus indicate to an operator that an organism is present in the sample contained in the sample vial. Other examples of instruments for detecting the presence of organisms in a sample by measuring the changes in carbon dioxide in the sample are described in U.S. Patent Nos. 4,945,060, 5,164,796, 5,094,955 and 5,217,876, the entire content of each of these patents being incorporated herein by reference.

An instrument employing an oxygen detecting technique is described in U.S. Patent No. 5.567,598, the entire content of which is incorporated herein by reference. Instruments that are capable of detecting changes in the pressure in the sample vial are described in U.S. Patent Nos. 4,152,213, 5,310,658, 5,856,175 and 5,863,752, the entire content of each of these patents being incorporated herein by reference. In addition, an instrument capable of detecting changes in carbon dioxide concentrations, changes in oxygen concentrations, and changes in pressures in the vessel is described in a U.S. patent application of Nicholas R. Bachur et al. entitled "System and Method for Optically Monitoring the Concentration of a Gas, or the Pressure, in a Sample Vial to Detect Sample Growth", Serial No. 09/892,061, filed on June 26, 2001, and another instrument capable of detecting changes in carbon dioxide concentrations or changes in oxygen concentrations in the vessel is described in a U.S. Patent No. 6,709,857, the entire contents of both being incorporated herein by reference.

It is noted that the results obtained by the organism detection techniques described above can be improved if the growth of the organism is enhanced to cause a greater production of carbon dioxide, a greater depletion of oxygen, or a greater change in pressure in the vessel. It is known that the biological activity of a solid sample in a liquid media can be enhanced by maintaining the solid sample in a suspended state. This can be accomplished by continuously stirring the solid-liquid mixture, which improves nutrient, waste and gas exchanges in the mixture.

Examples of stirring techniques are described in U.S. Patent Nos. 5,586,823, 4,483,623 and 4,040,605, the entire content of each of these patents being incorporated herein by reference. Each of these techniques employs a magnetic stirrer that is placed in the vessel containing the sample and manipulated by a magnet to stir the sample in the vessel.

Although these stirring techniques may be somewhat effective in enhancing sample growth, a need exists for an improved system and method for stirring suspended solids in a liquid media to enhance sample growth and thus improve sample detection results.

### SUMMARY OF THE INVENTION

In one embodiment, a system comprising one or more sample vessels is provided, the sample vessels comprising a liquid growth medium and a stirrer element, the stirrer element capable of being influenced by a magnetic force, and an incubation and measurement module comprising one or more openings for holding the one or more sample vessels. The incubation and measurement module further comprises at least two drive magnets associated with each of the sample vessels, and a magnet driver adapted to repeatedly move each of the at least two drive magnets toward and away from the surface of the associated sample vessel. The openings are configured to hold the sample vessels such that the longitudinal axis of the vessels are at an angle of less than 90° with the horizontal.

In another embodiment, a system comprising one or more sample vessels is provided, the sample vessels comprising a liquid growth medium and a stirrer element, the stirrer element capable of being influenced by a magnetic force, and an incubation and measurement module comprising one or more openings for holding the sample vessels. The incubation and measurement module further comprises at least two drive magnets associated with each of the one or more sample vessels and a magnet driver comprising a magnet shaft assembly that comprises a shaft and a plurality of the drive magnets. The drive magnets are coupled to the shaft in pairs, and the magnet driver is adapted to repeatedly move each of the at least two drive magnets toward and away from the surface of the associated sample vessel.

In a further embodiment, a method for stirring a sample is provided, comprising the steps of providing a sample vessel comprising a liquid and a stirrer element capable of being influenced by a magnetic force, tilting the vessel such that the longitudinal axis of the vessel is at an angle of less than 90° with the horizontal, and providing at least two drive magnets configured to repeatedly impose a magnetic influence on the stirrer element.

### BRIEF DESCRIPTION OF THE DRAWINGS

Fig. 1 is a perspective view of system according to an embodiment of the invention;
Fig. 2 is a detailed perspective view of an example of a panel in the system shown in Fig. 1 for housing sample vessels;

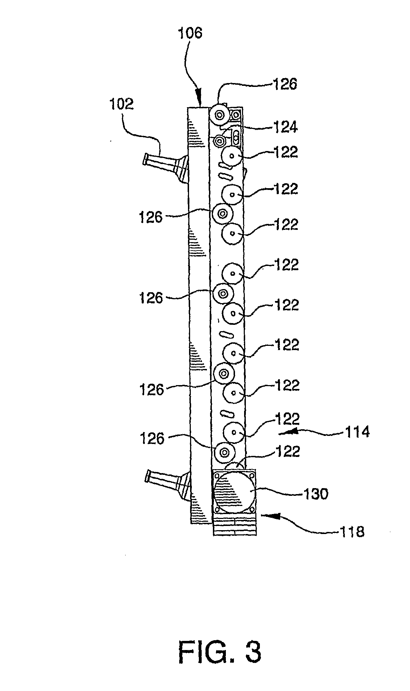

Fig. 3 is a side view of the panel shown in Fig. 2;
Fig. 4 is a diagrammatic view of a belt and pulley arrangement employed in the panel shown in Fig. 2;
Fig. 5 is a detailed exploded view of the drive arrangement of an embodiment of the invention;
Fig. 6 is a detailed view of the motor of the drive arrangement shown in Fig. 5;
Fig. 7 is a partial side view of a gear arrangement employed in the panel shown in Fig. 2 in accordance with another embodiment of the invention.
Fig. 8 is an enlarged perspective view of a row segment of the panel shown in Fig. 2 having a drive magnet arrangement in accordance with an embodiment of the invention;
Fig. 9 is a conceptual view showing an example of the relationship between the position and motion of the drive magnet arrangement of Fig. 8;
Fig. 10 illustrates the magnetic pole configuration of a stirrer element in accordance with another embodiment of the invention;
Fig. 11 illustrates the magnetic pole configuration of a stirrer element in accordance with another embodiment of the invention;
Fig. 12 illustrates the magnetic pole configuration of a stirrer element in accordance with another embodiment of the invention
Fig. 13 is a conceptual view showing an example of the stirrer motion created by the drive magnet arrangement of an embodiment of the invention;
Fig. 14 shows a configuration of drive magnet pairs according to an embodiment of the invention.

Identical and like reference numerals refer to identical and like parts, components and structures.

### DESCRIPTION

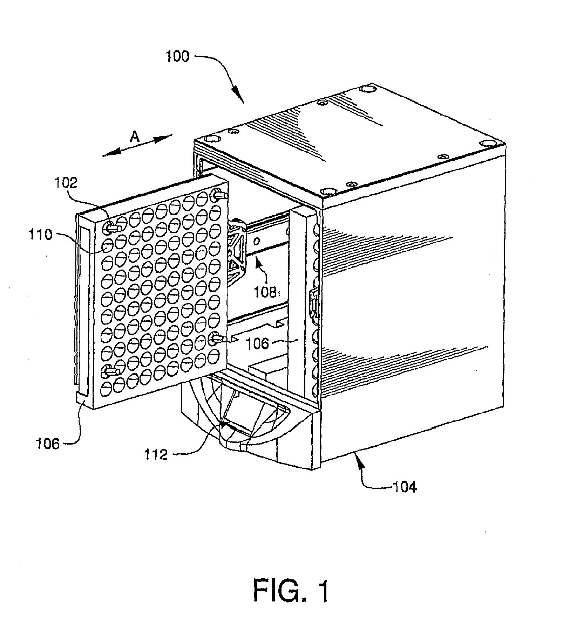

Fig. 1 shows an embodiment of a system including an incubation and measurement module 100 used for stirring samples suspended in liquid media in sample vessels 102. As illustrated, the incubation and measurement module 100 in this example includes a housing 104 and two panels 106 that can be slid into and out of the housing 104 along respective rail arrangements 108 in a direction along arrow A.

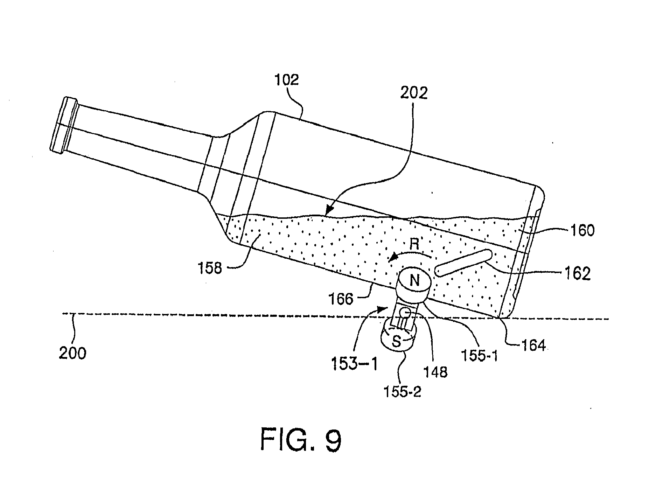

Each panel 106 includes a plurality of openings 110, each of which is adapted to receive a sample vessel 102. As discussed in more detail below, each vessel 102 includes a sample suspended in a liquid media, and a stirrer element. The openings 110 are tilted with respect to the horizontal so that the sample vessels 102 received in the openings 110 are also tilted. Generally, the openings are configured to hold the vessels such that the longitudinal axis of the vessels are at an angle of less than 90° with the horizontal 200 (see, e.g., Fig. 9). In this embodiment, the openings 110 are configured such that the sample vessels 102 received in the openings 110 are tilted at about 15° with the horizontal. This tilting creates a larger air to liquid interface 202 in the sample vessels 102 as compared to vessels in an upright position. Furthermore, the openings 110 and hence the sample vessels 102 need not be tilted at 15° with respect to the horizontal, but rather, can be tilted at an angle within the range of about 15° to about 25°, with the range of about 15° to about 20° being advantageous. However, the openings 110 and the sample vessels 102 can be tilted at any practical angle with respect to the horizontal that will create a useful air-to-liquid interface.

The openings 110 are arranged in a plurality of rows and columns as shown, and each panel 106 can have any practical number of openings. For example, the openings 110 can be arranged in ten rows and nine columns, thus totaling 90 openings 110 per panel 106. The incubation and measurement module 100 further includes one or more doors (not shown) for closing the housing 104 after the panels 106 have been received in the housing 104.

When a sample culture is to be analyzed by the incubation and measurement module 100, the sample culture is placed in a sample vessel 102, and the sample vessel 102 is loaded into a respective opening 110 in a respective panel 106 in the incubation and measurement module 100. The sample vessel 102 is a closed sample vial in this example. The incubation and measurement module 100 can further include a keyboard 112, a barcode reader (not shown), or any other suitable interface that enables a technician to enter information pertaining to the sample into a database stored in a memory in the incubation and measurement module 100, or in a computer (not shown) which is remote from the module 100 and controls the operation of the module 100. The information can include, for example, patient information, sample type, the row and column of the opening 110 into which the sample vessel 102 is being loaded, and so on. The module 100 can include the type of detecting devices as described in U.S. patent application Serial No. 09/892,061 and U.S. Patent No. 6,709,857 referenced above.

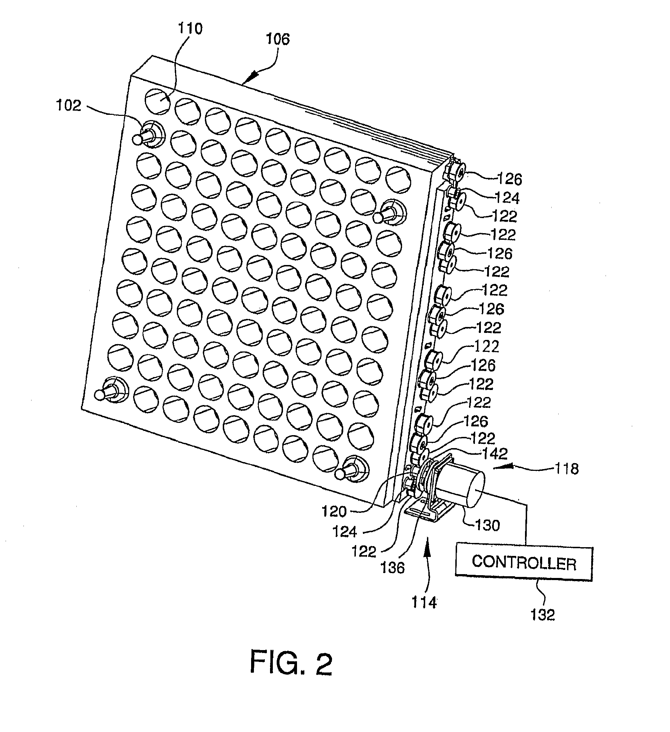

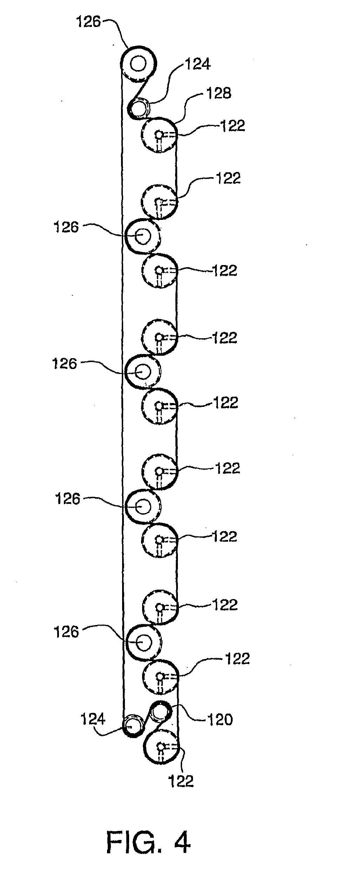

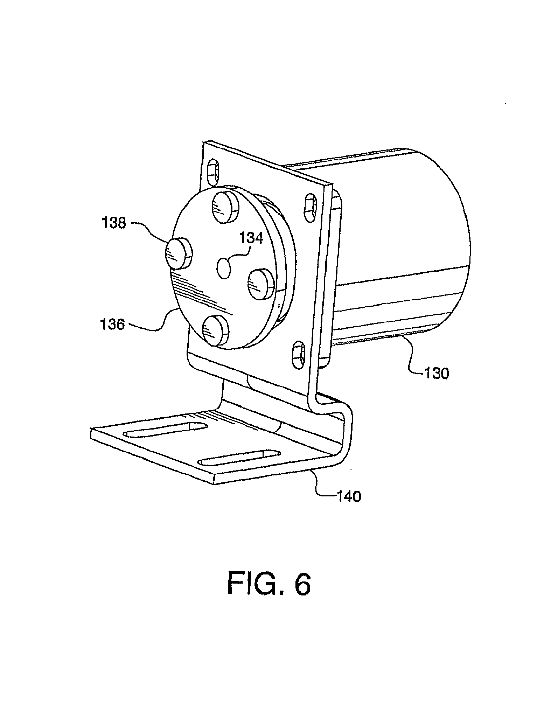

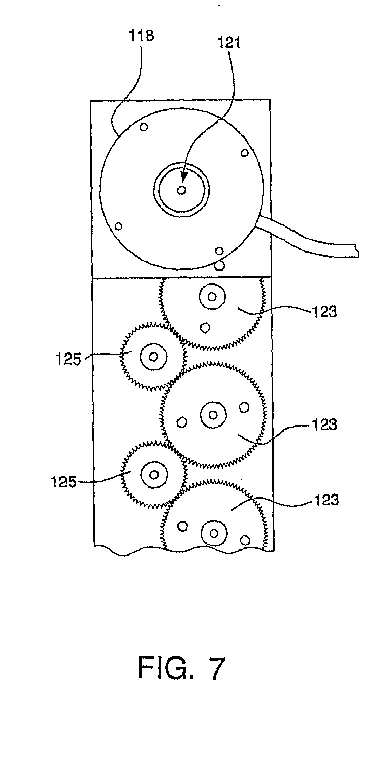

As shown in Fig. 2, in this embodiment, each panel 106 includes a drive assembly 114 for driving a plurality of magnet shaft assemblies 116. The drive assembly 114 includes a drive motor assembly 118 and a pulley arrangement comprising a drive pulley 120, shaft driving pulleys 122, idler pulleys 124 and 126, and a serpentine belt 128 that passes around the drive pulley 120, shaft driving pulleys 122, and idler pulleys 124 and 126 (see also Fig. 4). In another embodiment shown in Fig. 7, the drive assembly can include a drive motor assembly 118 and a gear arrangement comprising a drive gear 121, shaft driving gears 123, and idler gears 125, which each engage to transfer rotary motion from the drive motor assembly 118 to each magnet shaft assemblies. The drive motor assembly 118 includes a drive motor 130 that is controlled by, for example, a controller 132, such as a microcontroller or the like. The drive shaft 134 of the drive motor 130 is typically coupled to a magnet plate 136 as shown in detail in Fig. 6. The magnet plate 136 includes a plurality of magnets 138, which are generally strong magnets such as rare earth magnets. The drive motor 130 is mounted inside the housing 104 by, for example, a mounting bracket 140.

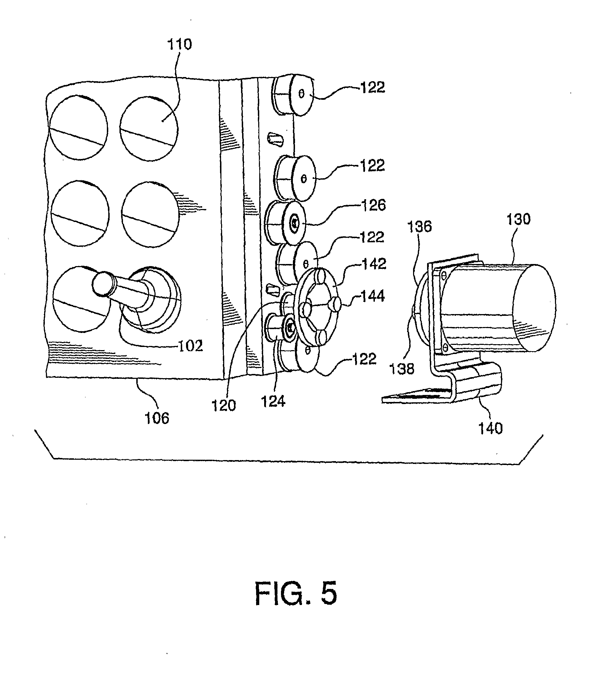

As shown in detail in Figs. 2 and 5, a magnet plate 142 having a plurality of strong magnets 144 such as rare earth magnets is coupled to drive pulley 120. The drive motor 130 is positioned inside housing 104 so that when its corresponding panel 106 is fully inserted in the housing 104, magnet plate 142 aligns with or substantially aligns with magnet plate 136. It is further noted that the drive motor 130 and magnet plate 136 are located outside of the rear wall 146 of the incubation chamber that is housed inside housing 104 and receives the panels 106. Accordingly, the magnet plate 136 and magnet plate 142 are positioned on opposite sides of the rear wall 146 of the incubation chamber. However, the magnets 138 and 144 on magnet plates 136 and 142 are strong enough to magnetically couple with each other through the rear wall 146 so that when the drive motor 130 rotates magnet plate 136, the magnetic coupling causes the rotation of magnet plate 136 to rotate magnet plate 142. The rotation of magnet plate 142 drives drive pulley 120, which drives the serpentine belt 128 to drive shaft driving pulleys 122 and idler pulleys 124 and 126. In a similar fashion in the embodiment shown in Fig. 7, the rotation of magnet plate 142 drives drive gear 121, which drives the meshed gears of the drive shaft driving pulleys 123 and idler pulleys 125. It is noted that by locating drive motor 130 outside of the incubation chamber, the heat emitted by drive motor 130 during operation does not influence the temperature within the incubation chamber. Furthermore, the drive motor 130 is not influenced by the heat of the incubation chamber, which can damage the drive motor 130.

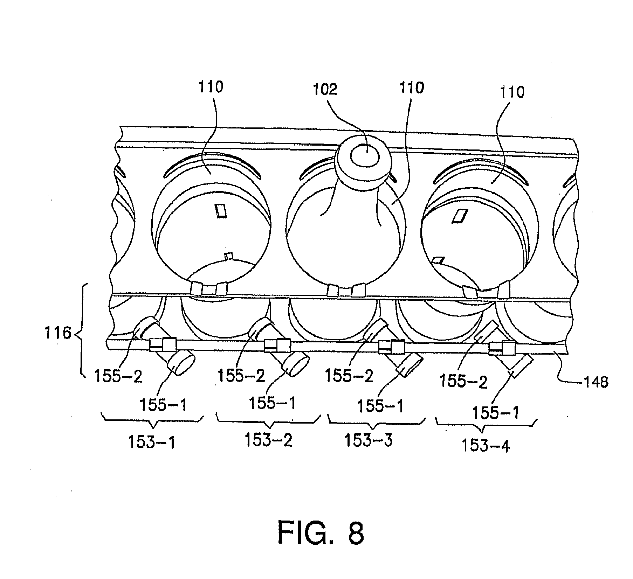

In this embodiment, each of the shaft driving pulleys 122 is coupled to a respective magnet shaft assembly 116. (See, e.g., Fig. 8) Each drive magnet shaft assembly 116 in this embodiment includes a shaft 148 that is coupled at one end to a respective shaft driving pulley 122 or gear 123, extends along the width of the panel 104 and is rotatably coupled at its other end to a mounting assembly. A plurality of drive magnet assemblies are coupled to each shaft 148 and rotate in unison with the shaft 148 when the shaft 148 is rotated about its longitudinal axis by its respective shaft driving pulley 122 or gear 123.

In the embodiment shown in Fig. 8, each drive magnet assembly 153-n has two strong drive magnets 155-1 and 155-2 secured to the rotatable shaft 148, thereby placing each drive magnet 155 of each assembly 153 between a proximate and distant position from each opening 110. In this embodiment, the total number of drive magnets 155 of a magnet shaft assembly 116 equals twice the number of openings 110 in the row corresponding to that magnet shaft assembly 116.

In the embodiment shown in Figs. 8 and 9, the drive magnets 155 are provided between each of the openings 110, such that two drive magnets engage or associate with each opening (e.g., engage or associate with each vessel 102 when placed into the opening). Fig. 8 is an enlarged perspective view of a row segment of the type of panel shown in Fig. 2. Fig. 9 is a conceptual view showing an example of the relationship between the position and motion of a drive magnet arrangement shown in Fig. 8 and a respective sample vessel containing a stirrer in accordance with an embodiment of the invention.

The positioning of the drive magnets 155 ensures that two drive magnets engage each opening 110 at alternate periods. As shown in greater detail in Fig. 8, the drive magnets 155 in this embodiment are provided in pairs 153 between each of the openings 110 along the shaft 148. (At each end of the shaft 148, a single drive magnet 155 is provided between the endmost opening (not shown) and the shaft 148 support member (not shown) in order to provide two drive magnets associated with each opening.) The surface of each drive magnet 155-1 can, for example, be provided as either an N pole or an S pole, and the surface of each drive magnet 155-2 can be provided as either an S pole or an N pole, respectively, to engage the stirrer element present in each vessel 102 in each opening 110. The drive magnets 155-1 and 155-2 can be discreet components or can be discreet portions of a single mechanical component.

In this embodiment, the drive magnet pairs 153-n are coupled to the shaft 148 such that each drive magnet 155-1 and 155-2 of each pair 153 extends from opposite sides of the shaft 148 (e.g., 180° from one another), and at an angle from the longitudinal axis of the shaft 148. A useful angle is approximately 30 degrees from the longitudinal axis. Each drive magnet pair 153-n is typically coupled at the same angle along the shaft 148.

In Figs. 8 and 9, the drive magnets 155-n of adjacent drive magnet pairs 153-n, or assemblies (e.g., magnet assemblies 153-1 and 153-2) are oriented at the same angular position with respect to each other about the shaft 148. That is, when the drive magnet 155-1 of magnet assembly 153-3 is positioned proximate to a corresponding opening 110, the drive magnet 155-1 of magnet assembly 153-2 is also positioned proximate to a corresponding opening 110 as shown in Fig. 8. In such a position, each drive magnet 155-1 of each assembly 153-n is positioned proximate to a corresponding opening 110. In a similar fashion, each drive magnet 155-2 of each assembly 153-n is positioned distant from an adjacent opening 110. As the shaft 148 rotates, the positions of each drive magnet 155-n transitions. Typically, the sets of drive magnets associated with a single opening/single vessel are located on the shaft such that a rotation of 180° moves one magnet from a position closest to a vessel located in the opening, to a position furthest from the vessel, and a second magnet from a position furthest from the vessel to a position closest to the vessel.

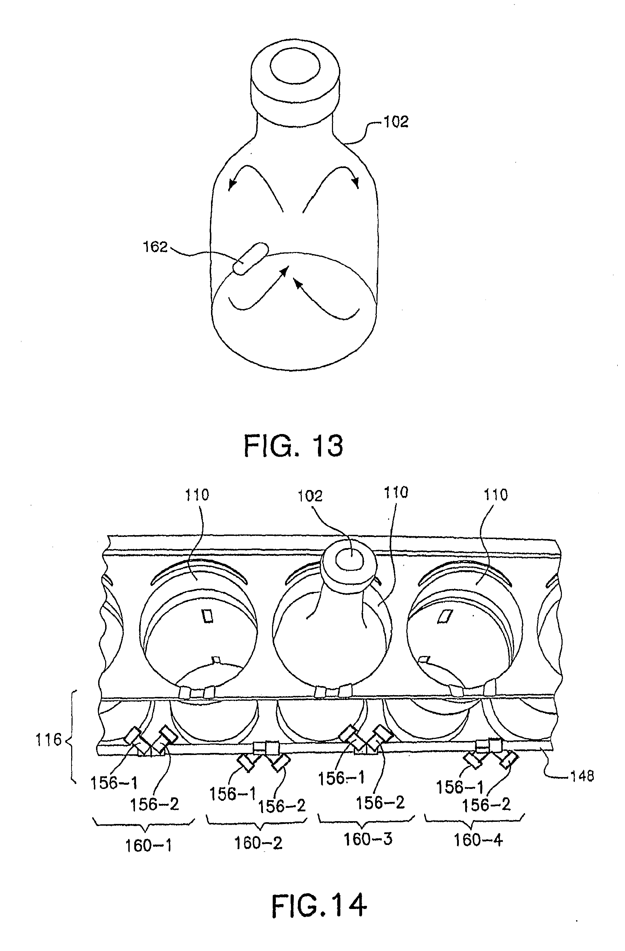

This embodiment reflects use of two magnets per opening/vessel, but any plurality of magnets will provide similar stirring advantages. In addition, the plurality of magnets associated with each opening/vessel may be attached to the shaft in any manner that provides the desired influence on the magnetic stirrer within the vessel. For example, instead of drive magnet pairs that extend from a shaft 148 at opposite sides of the shaft, it is possible to use magnet pairs 156-1, 156-2 that extend from the same side of the shaft, e.g. a first magnet 156-1 of a first drive magnet assembly 160-1 extending at an angle of 30° from the shaft, and a second magnet 156-2 extending at an angle of 150° of the drive magnet assembly. In such a case, the magnets 156-1 and 156-2 of an adjacent drive magnet assembly 160-2, will typically extend from an opposite side of the shaft 148. See, e.g., Figure 14, which shows such an embodiment.

Fig. 9 shows the relationship between a drive magnet 155-1 and 155-2 of a drive magnet assembly 153-n and a sample vessel 102 that has been loaded into the opening 110, according to one embodiment. While two drive magnets 155-n engage or associate with each opening 110 in this embodiment, Fig. 9 only illustrates one side of the opening 110 (i.e., one drive magnet 155-2 for the vessel 102), and illustrates one drive magnet of an adjacent opening 110 (i.e., one drive magnet 155-1 for an adjacent vessel that is not shown).

As shown in Figs. 8 and 9, as shaft 148 rotates in the direction designated R, the drive magnet 155-2 of assembly 153-1 moves proximate to the outer surface of sample vessel 102, and its magnetic force attracts the stirrer element, in this example, a magnetized stirrer element 162, to pull the stirrer element 162 away from the bottom edge 164 of the sample vessel 102 upward along the wall 166 of the sample vessel 102. (Note that drive magnet 155-1 of assembly 153-1 is intended to influence an adjacent vessel, not the vessel shown in Fig. 9.) As the drive magnet 155-2 continues to rotate, in a direction now away from the sample vessel 102, the stirrer element 162 becomes less influenced by the magnetic force of the drive magnet 155-2, and due to gravity falls along the wall 166 of the sample vessel 102 toward the bottom edge 164. However, at this time, the drive magnet 155-1 of an assembly 153-n₊₁ on the opposite side of the vessel 102 moves proximate to the outer surface of sample vessel 102, and its magnetic force attracts the stirrer element 165 to rotate and pull the stirrer element 162 away from the bottom edge 164 of the sample vessel 102 upward along the wall 166 of the sample vessel 102. As the drive magnet 155-1 of an assembly 153-n₊₁ on the opposite side of the vessel 102 continues to rotate, in a direction now away from the sample vessel 102, the stirrer element 162 becomes less influenced by the magnetic force of the drive magnet 155-2, and due to gravity falls along the wall 166 of the sample vessel 102 toward the bottom edge 164. This rotate and pull movement is repeated each time the drive magnets 155-1 and 155-2 (of adjacent drive magnet assemblies) moves along the outer surface of the sample vessel 102, and is repeated for each vessel of each opening 110. The stirring action of the stirrer element 162 advantageously follows a pattern having an analemma-like motion as shown in Fig. 13.

The motor 130 can be rotated at a speed of, for example, 150 rotations per minute, which causes the stirrer element 162 to travel through the stirring path described above up to 150 times per minute. However, the motor 130 can be controlled to rotate at any practical speed to achieve the desired stirring action.

The stirrer element 162 is typically a magnetic, ferrous metal-filled polymer. The term "magnetic" as used herein refers to a type of ferrous metal, such as magnetic stainless steel, that responds to the magnetic fields of a drive magnet. The ferrous material employed in the stirrer element does not itself have to be a magnet, nor does it have to be magnetized. The stirrer element can be rod shaped or cylindrical as shown, or have any other suitable shape. The stirrer element can be cylindrical with an overall length of about 0.500 inches to 0.750 inches, and an overall diameter of about 0.120 to about 0.220 inches, typically with rounded ends.

By increasing the ferrous fill content of the stirrer element 162, the magnetic influence that the drive magnet 154 has on the stirrer element 162 will increase. Likewise, by decreasing the ferrous fill content of the stirrer element 162, the magnetic influence that the drive magnet 154 has on the stirrer element 162 will decrease. Accordingly, the intensity of the stirring can be varied by simply replacing stirrer element 162 with a stirrer having a different ferrous fill content. Furthermore, the size and shape of the stirrer element 162 need not be changed. Also, by magnetizing the stirrer element 162, the magnetic influence that the drive magnet 154 has on the stirrer element 162 can be adjusted still further. Accordingly, the intensity of the stirring can be varied by simply replacing stirrer element 162 with a stirrer element having a different degree of magnetization.

In each embodiment, the drive magnets 154 and 155 can be provided having various magnetic intensities and magnetic orientation, for example, up to 10,000 Gauss or more. Each can also be provided alone, or in a plurality, and have various sizes and shapes, as magnetic and rare earth magnets are capable of being sintered or cast into different configurations. The drive magnets can act on each opening alone, or as an array or plurality. Different physical motions of the stirrer element can therefore be provided, including alternative rotations, lateral, vertical, and so forth. Each drive magnet can also be provided having different rates of oscillation, i.e., tens, hundreds, or even thousands of rotations per minute.

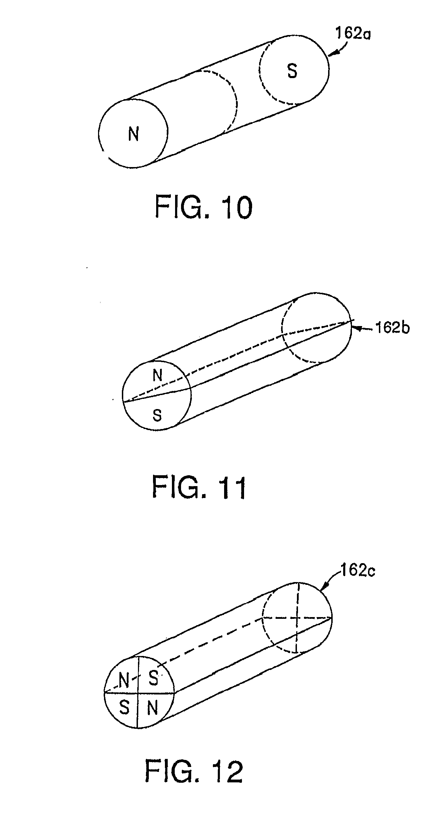

As reflected in Figs. 10, 11 and 12, the stirrer elements can be provided with various shapes, sizes, magnetic and polymer fill levels, and magnetic pole orientations. For example, the shape of the stirrer element can be selected based on the associated forces acting upon it. The main forces on the stirrer element that cause its intrinsic motion within the liquid include magnetism, gravity, buoyancy and viscosity. The magnetic force causing the movement of the stirrer element either toward or away from (in cases where the stirrer element is magnetized) the drive magnets varies by the coercivity of the magnetized fill in the stirrer element, the inherent strength of the drive magnets, and inversely by the distance between the two. Therefore, the stirrer element can be shaped to best take advantage of the volume shape of the liquid in order to orient its magnetic poles (when magnetized) closer to the drive magnets. This shape could be a planar form (rectangular polyhedral), linear (cylindrical rod), spherical, or other more complex shape suitable for the volume stirred and the desired vigor of agitation. Gravity tends to pull the stirrer element towards the center of the earth. If the stirrer element is very large with respect to the liquid volume that it is stirring (heavy), it will tend to fall with more force than if it is small, and thus lighter. Also, the added inertia of a larger stirrer element mass tends to oppose any increase in gravitational attraction. Controlling the relative mass of the stirrer element through shape optimization can balance the gravitational force with respect to the element's buoyancy and the liquid's viscosity. Likewise, the stirrer element's length to diameter ratio can either increase or decrease the force of viscous drag within the liquid. In creating more (or less) drag, the stirrer element is either moved less (or more) within the liquid for a given viscosity and external applied magnetic field. In addition, the stirrer element can be magnetized with different pole orientations and intensities. Figs. 10, 11 and 12 illustrate a number of magnetic pole configurations of stirrer elements 162a, 162b and 162c, in accordance with embodiments of the invention.

In accordance with an embodiment of the invention, the stirrer elements 162, 162a, 162b, 162c can comprise about 20% to about 80% of polymer by weight, with the remaining 80% to 20% of the weight being ferrous metal or other magnetic or magnetizable materials. However, any ratio of polymer to ferrous metal can be used as long as it provides sufficient cohesiveness to hold the stirrer element together and to allow sufficient responsiveness to the drive magnet 154. The polymer material is preferably a biologically inert polymer, such as nylon or polypropylene, which reduces the overall surface hardness of the stirrer element, and thus reduces potential damage to the solid sample 158 in the suspension as well as to the sample vessel 102. In one embodiment of the invention, the ferrous material is stainless steel, but can be any suitable material that can respond to magnetic influence from the drive magnet 154. The stirrer element can be further color coded with colors such as blue, gray, red, green, orange, and so on, to provide an indication of the type and percentage content of the polymer and ferrous material. The stirrer element can be provided in the sample vessel 110, or can be added to the sample vessel 110 prior to or after adding the solid sample 158 and liquid media 160 to the sample vessel 110.

The stirrer element can be made from a material that can be magnetized to move in response to the rotation of the permanent magnets of the drive magnet assemblies to induce a continuous or pulsing movement sufficient to provide a stirring motion to the liquid reagent in each vessel. Typically, the stirrer element has a substantially cylindrical shape with a length and diameter sufficient to induce the desired movement to the liquid reagent. The stirrer element generally has a length of about 15-25 mm and diameter of about 2-6 mm. In one preferred embodiment the stirring bar has length of about 20 mm (0.75 inches) and diameter of about 5 mm (0.22 inches). Typically, the stirrer elements have slightly rounded ends

In a preferred embodiment, the stirrer element is produced from a mixture of a moldable polymer or copolymer and a magnetizable material. An example of a suitable polymer includes a styrene-ethylene-butylene-styrene (SEBS) copolymer, as this copolymer is biologically inert and easily molded to the desired shape and size. In other embodiments, the polymer component of the stirrer element is selected from the group consisting of polyethylene, polypropylene, polybutylene, and polystyrene. Typically, the polymer component is a flexible thermoplastic polymer or copolymer. The polymer or copolymer is typically included in an amount of about 20 wt% to about 40 wt% and preferably about 30 wt% based on the total weight of the finished stirrer element.

The magnetizable material is typically included in the amount of about 60 wt% to about 80 wt% and preferable about 70 wt% based on the total weight of the finished stirrer element. The magnetizable material is generally a ferrite compound that can be magnetized to a suitable power to provide the necessary stirring effect. Examples of magnetizable ferrites include Group II metal ferrites and particularly strontium ferrite. The magnetic or magnetizable component can be selected from the group consisting of iron, stainless steel, and ferrite alloys. One preferred embodiment is a mixture of 30 wt% styrene-ethylene-butylene-styrene copolymer and 70 wt% strontium ferrite. The components are mixed together and molded by melting and extruding as a cylindrical member and cutting to length. Alternatively the mixture of polymer and strontium ferrite particles can be compression molded into the desired shape, or heated and injection molded into the desired shape. As noted above, a particularly preferred embodiment of the invention, the stirrer element can comprise a mixture of about 70 wt% strontium ferrite with 30 wt% SEBS polymer, and molded into an approximately 20 mm (0.75 inches) long cylinder, approximately 5 mm (0.220 inches) in diameter, and with rounded ends. The stirrer element can be further magnetized to saturation at approximately 300 Gauss, with two poles aligned diametrically as shown in Figs. 11 and 12, or at the ends of the element as shown in Fig. 10. The relatively soft SEBS polymer provides adequate compliance to avoid damage to any particulates suspended in the liquid media, and is biologically inert. The 70 wt% strontium ferrite supplies moderate magnetization, persistent strength, nonreactivity, and ease of formulation and molding.

In some embodiments, the stirrer elements are formed and then magnetized to the desired power to provide the proper stirring effect. The stirrer elements are magnetized to a power of about 200 Gauss to about 400 Gauss using standard magnetizing procedures. In one preferred embodiment the stirring magnet is magnetized to a power of about 300 Gauss. The ferrite material, such as strontium ferrite, is able to provide a moderate magnetization with persistent strength for the intended life of the stirrer element.

Multiple poles can be patterned within the shape of the stirrer element, and poles can be axially oriented, radially oriented, circularly oriented, or designed in many other configurations to impart the desired attractive or repellent geometry to the stirrer. Such various magnetic pole geometries can further achieve diverse motion of the stirrer element within the liquid and thereby produce desired effects. In preferred embodiments of the invention, the magnetic stirrer element is produced with the opposite poles oriented diametrically around the circumference of the stirrer element. In one embodiment, a stirrer element 162a is formed with a north pole at a first end, and a south pole at a second end f the stirrer element as shown in Fig. 10. In another embodiment, a stirrer element 162b is formed with one north pole and one south pole at each end, where the poles extend longitudinally along substantially the entire length of the stirrer element with the poles alternating around the circumference of the stirrer element as shown in Fig. 11. In yet another embodiment, the stirrer element 162c includes two or more pairs of opposite poles at each end where the poles alternate around the circumference of the stirrer element and extend substantially along the length of the stirrer element as shown in Fig. 12. In this manner the lines of magnetic flux extend around the circumference of the stirrer element rather than end to end as in conventional bar magnets.

The diametrically and axially oriented poles can induce a random, 3-dimensional movement of the stirrer element in response to the movement of the drive magnets. The drive magnets generally move in an orbital path with respect to the culture vessel in a sweeping motion in a plane parallel to the longitudinal axis of the culture vessel. The axis of the circular path of the drive magnets is such that the drive magnets move toward and then away from the culture vessel and the stirrer element so that the stirrer element may exhibit an erratic and pulsating motion. The circular motion of the drive magnets in a generally sweeping path induces a random motion to the stirrer element. The diametrically and axially oriented poles of the stirrer element cause the stirrer element to rotate about its longitudinal axis and simultaneously move and rotate about an axis generally perpendicular to the longitudinal axis of the stirrer element thereby experiencing an analemma-like motion to provide the stirring effect.

As shown in Figs. 11 and 12, the magnetic poles can be induced diametrically (axially) to produce a complex, 3-dimensional, analemma-like stirring pattern as shown in Fig. 13. The magnetic strength of the stirring element in accordance with this embodiment of the invention is typically sufficient to break free from sedimented red blood cells, but not so high as to rupture cells or resin particles.

The increase in availability of many different magnetic materials and thermoplastic polymers with a wide range of properties in recent years has made the molding or extrusion of such complex stirrer element shapes described above possible. Extensive adjustments, therefore, can be made to both the design of the stirrer element and the drive magnets, as described in greater detail below, in order to finely control the degree of motion imparted to the liquid. Also, the magnetization of ferrite filled stirrer elements as described above is easily achieved using high strength permanent magnet fixtures, rather than electromagnetic discharge. Therefore, permanent magnet fixtures with energy directors easily meet production volume requirements for producing stirrer elements.

To adjust the fill ratio of magnetic material in the above embodiments, the magnetic material that is molded with a polymeric matrix into the stirrer element shape can have different percentage volumes (percent fill) and can be chosen from different materials. A higher percentage volume fill of magnetic material will tend to make the stirrer element more massive when the other ingredients used in the element's manufacture are lightweight polymers. The more mass that the stirrer element has, the more influence and effect on stirring the force of gravity will have for the same viscosity or viscoelasticity of the liquid being stirred, and becomes more of a factor in its motion.

In addition to percent volume adjustments, the type of material can be varied to adjust mass and to adjust magnetic coercivity. For example, if the powdered metal fill in the stirrer element is a martensitic stainless steel, it will have a much lower magnetic moment than an element with the same percentage fill but having a higher coercivity, such as strontium ferrite.

Not only can the type of material be selected for magnetic force, but also for nontoxicity, such as required in the case of using the stirrer element in biological samples. Also, the oxidation potential for the material can be selected to suit the application. For example, rust forming in an optically interrogated sampler container could severely impact performance.

To adjust the polymer fill in the above embodiments, the percent volume or mass and the type of polymer used to manufacture the stirrer element can be selectable. A higher percentage of polymer fill can alter the stirrer physical properties for different application environments. For instance, if the polymer has a low durometer value (meaning it is soft) and its percentage increased, the amount of impact force applied to the solids suspended in the liquid media can be decreased. As the polymer volume becomes less and the magnetic fill becomes greater, the element's hardness typically increases and its apparent collision damage to suspended solids may increase.

Selecting different types of polymer can also enhance other performance attributes. If the desired compliance of the material is known, the inherent compatibility with the stirred contents becomes paramount. Some polymers are known to be toxic to metabolic processes, and some are known to be relatively inert. In the case of selecting a nontoxic polymer, a choice of PTFE instead of polyurethane could determine the element's ultimate effect on stability of the stirred liquid's contents. In certain cases, the selection of a polymer that is chemically active, absorptive, or destructive to agents that harm the liquid's contents may be desirable. Including these detrimental or alternatively, beneficial polymers in the stirrer element can be used to adjust the performance of the container's contents.

Various embodiments of the invention provide several advantages over the conventional stirring devices. For example, because the tilted openings 110 maintain the sample vessel 102 at an with respect to the horizontal, the embodiments facilitate maximum exposure of liquid phase to gas phase. This therefore, provides an improved dissolved gas exchange as a function of the angle. Furthermore, the angled orientation of the sample vessel 102 increases the probability that the drive magnets will maintain magnetic influence over the stirrer elements. Also, the stirring action can be gentler than in conventional methods since the path of the stirrer element is constrained by the wall 166 of the sample vessel. All of these improved characteristics of the stirring system enhances the growth of the sample in the liquid media 160 and thus increases the overall carbon dioxide production, oxygen depletion and pressure variation in the sample vessel, thereby improving sample detection results.

Those skilled in the art will appreciate that modifications are possible in the embodiments described herein without materially departing from the novel teachings and advantages of this invention. Accordingly, all such modifications are intended to be included within the scope of this invention as defined in the following claims.

## Claims

1. A system comprising:
a plurality of sample vessels, the sample vessels comprising a liquid growth medium and a stirrer element, the stirrer element capable of being influenced by a magnetic force;
an incubation and measurement module comprising a plurality of openings for holding the one or more sample vessels, wherein each of the one or more openings is associated with at least two drive magnets, and
a magnet driver comprising a plurality of the drive magnets adapted to repeatedly move each of the at least two drive magnets toward and away from the surface of an associated sample vessel when located in the associated opening, the magnet driver comprising a magnet shaft assembly;
wherein the magnet shaft assembly comprises a shaft and a plurality of the drive magnets, and
wherein the plurality of drive magnets are coupled to the shaft in pairs, the pairs being discrete components or discrete parts of a single component, or a combination thereof,

2. The system of claim 1, wherein upon operation of the magnet driver, the at least two drive magnets associated with one of the sample vessels move closest to the surface of the associated sample vessel at different points in time, and the movement of the at least two drive magnets imposes a magnetic influence on the stirrer element in the associated sample vessel to move the stirrer element.

3. The system of claim 2, wherein the magnet driver further comprises: a motor engaged with the shaft to rotate the magnet shaft assembly and move the drive magnets such that a first drive magnet is closest to the outer surface of the associated sample vessel and a second drive magnet is away from the outer surface of the associated sample vessel in a first rotational position, and the second drive magnet is closest to the outer surface of the associated sample vessel and the first drive magnet is away from the outer surface of the associated sample vessel in a second rotational position.

4. The system of claim 1, wherein each of the drive magnet pairs comprises: a first drive magnet coupled to and extending from the shaft at a first angle, and a second drive magnet coupled to and extending from the shaft at a second angle,
wherein the first drive magnet is associated with a first of the one or more openings and the second drive magnet is associated with a second of the one or more openings adjacent to the first of the one or more openings.

5. The system of claim 4, wherein the first and second drive magnets extend from first and second locations on the shaft, respectively, and wherein the first and second locations are at approximately opposite sides of the shaft.

6. The system of claim 5, wherein the first and second rotational positions are approximately 180 degrees apart.

7. The system of claim 4, wherein the first and second angles are approximately 30 degrees.

8. The system of claim 4, wherein the magnet shaft assembly is located in the module such that each of the drive magnet pair is located between two of the sample vessel openings.

9. A method for stirring a sample, comprising the steps of:
providing a sample vessel comprising a liquid and a stirrer element capable of being influenced by a magnetic force;
tilting the vessel such that the longitudinal axis of the vessel is at an angle of less than 90° with the horizontal; and
providing at least two drive magnets configured to periodically impose a magnetic influence on the stirrer element.

10. The method of claim 9, further comprising the step of repeatedly moving the at least two drive magnets toward and away from an outer surface of the sample vessel and/or further comprising the step of exerting the magnetic influence on the stirrer element from each of the at least two drive magnets at different points in time.

11. The method of claim 9, wherein each of the at least two drive magnets is moved closest to the surface of the sample vessel at different points in time.

12. The method of claim 10, wherein the step of moving comprises: moving a first drive magnet away from the outer surface of the sample vessel as a second drive magnet is moved toward the outer surface of the sample vessel, and wherein preferably the first and second drive magnets move toward and away from different locations on the outer surface of the sample vessel.

13. The method of claim 10, wherein the magnetic influence moves the stirrer element along a side wall of the sample vessel and/or wherein, during a portion of the moving, gravity moves the stirrer element toward the bottom of the sample vessel.

14. The method of claim 9, wherein the magnetic influence moves the stirrer element in an analemma pattern.

15. The method of claim 9, wherein the stirrer element is magnetized to between about 200 Gauss to about 400 Gauss, preferably to about 300 Gauss.
